(19) Europäisches Patentamt
European Patent Office
Office européen des brevets

(11) **EP 2 376 563 B1**

(12) **EUROPEAN PATENT SPECIFICATION**

(45) Date of publication and mention of the grant of the patent:
**05.12.2018 Bulletin 2018/49**

(21) Application number: **08875091.4**

(22) Date of filing: **17.12.2008**

(51) Int Cl.:
***C08K 3/04*** *(2006.01)* ***C08K 3/34*** *(2006.01)*
***C08K 5/19*** *(2006.01)* ***B60C 5/00*** *(2006.01)*
***C08J 3/20*** *(2006.01)* ***C08J 3/22*** *(2006.01)*

(86) International application number:
**PCT/EP2008/010752**

(87) International publication number:
**WO 2010/069341 (24.06.2010 Gazette 2010/25)**

(54) **PROCESS FOR MAKING TIRES FOR VEHICLE WHEELS**

VERFAHREN ZUR HERSTELLUNG VON LUFTREIFEN FÜR FAHRZEUGRÄDER

PROCÉDÉ DE PRÉPARATION DE PNEUMATIQUES POUR ROUES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**19.10.2011 Bulletin 2011/42**

(73) Proprietor: **Pirelli Tyre S.p.A.**
**20126 Milano (IT)**

(72) Inventors:
- **GALIMBERTI, Maurizio**
  **20126 Milano (IT)**
- **GIANNINI, Luca**
  **20126 Milano (IT)**
- **LOSTRITTO, Angela**
  **20126 Milano (IT)**
- **SENATORE, Stanislao**
  **80063 Piano di Sorrento (IT)**

(74) Representative: **Longoni, Alessandra**
**AL & Partners Srl**
**Via C. Colombo ang. Via Appiani**
**(Corte del Colone)**
**20038 Seregno (MI) (IT)**

(56) References cited:
**EP-A1- 1 273 616** **WO-A1-03/008491**
**JP-A- 2005 289 758** **US-A1- 2005 090 584**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 376 563 B1

## Description

### Field of the invention

The present invention relates to a process for making tires for vehicle wheels comprising at least one structural element obtained by crosslinking a crosslinkable elastomeric material comprising at least one layered clay.

### Background of the invention

In the rubber industry and in particular in the tire industry, it is known practice to add fillers and, among them, layered materials to crosslinkable elastomeric compositions, in order to improve their mechanical properties, both static and dynamic.

To attain an effective improvement of mechanical properties of the crosslinkable elastomeric compositions, the layered materials have to be effectively dispersed in the elastomeric matrix.

Common layered materials are layered silicates for example montmorillonite. Montmorillonite (MMT) is made of layers approximately 1 nm thick, with lateral dimensions between 100 and 1000 nm, stacked to form a regular Van der Waals gap between the layers, called gallery.

Isomorphic substitution of Al with Mg atoms within the layers generates negative charges that are counterbalanced by alkali and alkaline earth cations situated inside the galleries. These cations can be easily involved in exchange reactions with other cations. Moreover, each silicate layer is terminated by oxygen atoms on its faces and by oxygen atoms and hydroxide groups on its periphery: as a consequence, MMT has a hydrophilic nature.

In the prior art, to achieve the goal of an effective dispersion of the layered silicate in an elastomeric matrix and hence of an effective improvement of mechanical properties, the hydrophilic layered silicate is rendered organophilic, by exchanging the alkali cations with long chain quaternary alkyl ammonium (onium) cations, thus causing a modification of the clay surface polarity. This quaternary alkyl ammonium (onium) cation is thus the compatibilizer between layered silicate and rubber.

Many examples are available in the prior art relating to the addition of layered silicates, in particular montmorillonite modified with quaternary alkyl ammonium (onium) cation, to crosslinkable elastomeric compositions.

In US 2002/0095008 a sulfur-curable rubber compound for a tire tread rubber, in particular tire tread rubber for racing tires, comprises at least one diene rubber, at least one filler, and at least one plasticizer, wherein the rubber compound comprises from 5 phr to 90 phr of at least one layered silicate modified with alkylammonium ions and free of guest molecules that have been polymerized or swelled in by a prior treatment. The abovementioned rubber compound is said to provide high skid resistance (high friction coefficient, good grip) of the tires made therefrom, combined with a reduction in hardness at high temperatures.

International Patent Application WO 05/002883 in the name of the Applicant, relates to a tire of a cap and base construction, comprising, among other features: a belt structure, a tread band superimposed circumferentially on said belt structure comprising a radially outer layer designed to come into contact with the ground and a radially inner layer interposed between said radially outer layer and said belt structure, wherein said radially inner layer includes a crosslinked elastomeric composition comprising: at least one diene elastomeric polymer; at least one layered inorganic material having an individual layer thickness of from 0.01 nm to 30 nm, preferably of from 0.05 nm to 15 nm, said layered inorganic material being present in an amount of from 1 phr to 120 phr, preferably of from 5 phr to 80 phr. The addition of said layered inorganic material increases the mechanical properties of the elastomeric composition without observing undesired effects on its remaining properties (i.e. viscosity, hysteresis, green adhesiveness).

International Patent Application WO 07/144012 of the same Applicant, discloses that it is possible to reduce the tendency to a "thermoplastic behaviour" by adding to the crosslinkable elastomeric compositions at least one "exfoliated nanosized layered material" i.e. a nanosized layered material showing the following characteristics:

- an individual layer thickness of from 0.2 nm to 30 nm, preferably of from 0.3 nm to 15 nm, more preferably of from 0.5 nm to 2 nm;
- in a X-ray powder diffraction (XRPD) pattern, a X-ray intensity ratio (R) defined according to the following formula:

$$(R) = [A_{(001)}/A_{(hk0)max}] \times 100$$

wherein:

- $A_{(001)}$ is the area of the peak (001);
- $A_{(hk0)max}$ is the area of the most intense peak (hk0), at least one of h or k being different from 0;

lower than or equal to 20, preferably lower than or equal to 15, more preferably lower than or equal to 10, still more preferably lower than or equal to 5.

The addition of said nanosized layered material allows to obtain crosslinked elastomeric compositions showing low dinamic elastic modulus (E') at low temperatures and a reduced variation of said dynamic elastic modulus (E') as the temperatures increases (i.e., a reduced thermoplastic behaviour). Moreover, said crosslinked elastomeric compositions show improved tear resistance. Furthermore, said crosslinkable elastomeric compositions show improved dynamic elastic modulus (G') measured at both low deformations (3%) and high deformations (10%).

The so obtained crosslinkable elastomeric compositions could be advantageously used in the production of crosslinked manufactured products, in particular in the manufacturing of tires, more in particular in a tire tread band.

International Patent Application WO 08/009304, of the same Applicant, further discloses a tire comprising at least one structural element including a crosslinked elastomeric material obtained by crosslinking a crosslinkable elastomeric composition comprising: (a) 100 phr of at least one elastomeric polymer (b) from 0.1 phr to 15 phr, preferably from 0.3 phr to 10 phr, of at least one methylene donor compound (c) from 0.4 phr to 20 phr, preferably from 0.8 phr to 15 phr of at least one methylene acceptor compound (d) from 1 phr to 50 phr, preferably from 2 phr to 40 phr, more preferably from 4 phr tro 30 phr of at least one layered material, said at least one layered material having an individual layer thickness of from 0.2 nm to 30 nm, preferably of from 0.3 nm to 15 nm, more preferably of from 0.5 nm to 2 nm wherin said nanosized layered material shows the following characteristics:

- an individual layer thickness of from 0.2 nm to 30 nm, preferably of from 0.3 nm to 15 nm, more preferably of from 0.5 nm to 2 nm;
- in a X-ray powder diffraction (XRPD) pattern, a X-ray intensity ratio (R) defined according to the following formula:

$$(R) = [A_{(001)}/A_{(hk0)max}] \times 100$$

wherein:

- $A_{(001)}$ is the area of the peak (001);
- $A_{(hk0)max}$ is the area of the most intense peak (hk0), at least one of h or k being different from 0;

lower than or equal to 20, preferably lower than or equal to 15, more preferably lower than or equal to 10, still more preferably lower than or equal to 5. Preferably, said at least one structural element is selected from bead filler, sidewall insert, tread underlayer, tread base.

According to preferred embodiments of the above mentioned International Patent Applications, said "exfoliated layered material" could be obtained by milling:

- at least one pristine layered material;
  or
- a mixture comprising:
- at least one pristine layered material;
- at least one alkyl ammonium or alkyl phosphonium salt.

In the first case, the exfoliated layered clay so obtained could be then reacted with the ammonium cation.

Other approaches are available in the teachings of published Patent Applications to prepare at least partially exfoliated clays.

European Patent Application EP 1 321 489 A1 relates to preparation and use of nanocomposites comprised of an elastomer matrix which contains a dispersion of at least partially exfoliated platelets of an intercalated, multilayered, water swellable clay which contains cationically exchangeable ions in its galleries between layers (e.g. a smectite clay such as, for example, montmorillonite clay) wherein the exfoliated platelets are created in situ by combining an elastomer latex of positively charged elastomer.

United States patent application US 2005/0065265 A1 discloses a blend of polybutadiene rubber and a composite of styrene/butadiene elastomer which contains exfoliated clay platelets and states that the inclusion of the exfoliated clay platelets in the rubber composition is considered to be significant because it is considered to provide significant reinforcement for the dispersed styrene/butadiene rubber phase of the rubber composition. In particular, about 15 to about 45 phr of at least one emulsion polymerization prepared elastomeric high styrene-containing styrene/butadiene copolymer rubber having a bound styrene content in a range of about 35 to about 55 percent and a single Tg within a range of from about - 20°C to about -45°C, as a composite thereof containing from about 1 to about 80, alternately from about 1 to about 45, parts by weight of at least partially exfoliated, intercalated clay particles per 100 parts by weight of

the styrene/butadiene copolymer rubber as a dispersion therein.

The exfoliated clay platelets are prepared according to the following procedure. A water swelled swellable clay which has been pre-intercalated with an intercalant such as, for example, a quaternary ammonium salt, is dispersed into an acqueous emulsion of pre-formed acqueous emulsion polymerization prepared high styrene containing styrene/butadiene elastomer/clay particlaes. The clay is intercalated by an ion exchange of the quaternary ammonium salt with cationic exchangeable ions (e.g. sodium ions) contained within the galleries between the stacked platelets of the water swelled clay.

United States patent application US 2005/0065266 A1 relates to preparation of nanocomposites comprised of elastomer and a dispersion therein of an at least partially exfoliated, intercalated, multilayered, water swellable clay. The nanocomposite is prepared by addition of a water swellable clay particles to an aqueous emulsion of anionic (negatively charged) elastomer particles to form a mixture thereof to which an amine having at least two amine centers in a form of a cationic (positively charged) polymeric quaternary amine or ethylene polyamine is subsequently added to both intercalate and at least partially exfoliate the water swelled clay particles by an ion exchange within the galleries of the multilayered clay with cation exchangeable ion(s) and to aid in promoting the elastomer and resultant clay particles to coagulate and form a nanocomposite thereof.

European Patent Application EP 1 273 616 A1 discloses the reaction of a layered clay with a quaternary ammonium cation using a mixture of an elastomer. According to this Patent Application, clay is converted from being hydrophilic in nature to being more hydrophobic in nature and therefore more compatible with the elastomer by bulk blending the elastomer host with a smectite clay, preferably a montmorillonite or hectorite clay, and a hydrocarbyl onium salt, such as for example a quaternary ammonium salt. Therefore, such in situ procedure of intercalation and at least partially exfoliation relies upon a bulk blending thereof with an elastomer host at an high temperature and under high shear conditions in contrast to pre-intercalating the clay in an aqueous based medium and in contrast to simple low viscosity melt processing of a thermoplastic polymer.

As far as the mixing procedure is concerned, in this European Patent Application it is stated that the mixing of the rubber composition can be accomplished by methods known to those having skill in the rubber mixing art. For example, the ingredients are typically mixed in at least two stages, namely, at least one non-productive stage followed by a productive mix stage.

Patent application US-A-2005/090584 describes rubber compositions that does not include carbon black or silica and used for the preparation of tires. The compositions are prepared by mixing a diene-rubber with a clay to form a clay-rubber mixture. The clay-rubber mixture may then be contacted with a quaternary ammonium salt to which an accelerator and a vulcanisation agent are further added. In this process, the quaternary ammonium salt is not added to a rubber composition comprising a filler.

Finally, patent application JP-A-2005 289 758 relates to a process for the preparation of rubber compositions comprising clay by first preparing a masterbatch obtained by mixing a diene-rubber latex with clay followed by the addition of an aqueous solution of a quaternary ammonium salt into the latex mixture. The latex diene-rubber masterbatch is further used as additives in compositions comprising butyl rubber and carbon black.

## Summary of the invention

The Applicant noticed that in general the use of layered material as filler in the elastomeric compositions is advantageous in promoting the desired outstanding reinforcement of the crosslinked elastomeric compositions since a high dinamic elastic modulus (E') can be obtained at low temperature. However, the Applicant has further noticed that a somewhat difficult tuning of the mechanical properties of the elastomeric compositions can be also obtained, for their tendency to show a noticeable reduction of the dynamic elastic modulus (E') as the temperature increases, thus causing a "thermoplastic behaviour" of the crosslinked elastomeric compositions.

While a delamination of the layered clay material within the elastomeric composition could, in principle, enhance the mechanical properties thereof, the need of a phase of milling the clay in order to obtain at least its partial delamination is energy consuming and requires specialized equipments.

The Applicant has faced the problem of enhancing the features of structural elements of tires by the addition of at least one layered clay in the elastomeric compositions used for preparing the structural elements.

The Applicant has found that it is possible to enhance the reinforcing effect of a layered clay in one elastomer by improving the delamination and the dispersion thereof by mixing at least one layered clay, at least one further filler and at least one elastomer in substantial absence of one quaternary alkyl onium cation so as to at least partially delaminate said at least one layered clay. Subsequently, at least one quaternary alkyl onium cation selected from quaternary alkyl ammonium or quaternary alkyl phosphonium or mixture thereof is added to the mixture so prepared.

The Applicant has thus pursued the above reported objective without the need of a separate process step requiring specific equipment for the preparation of a delaminated or exfoliated layered clay, the Applicant has in fact obtained such results by using standard equipments, i.e. equipment typically employed for the industrial preparation of

a crosslinkable elastomeric composition.

The Applicant has further found that with the process of the invention it is possible to overcome the drawbacks mentioned above and achieve an easier tunability of the elastic modulus (E') values along with a better balance of said values at low and high temperature.

In particular, the Applicant has noticed that it is possible to achieve high elastic modulus (E') values at high temperature without having exceedingly high elastic modulus (E') values at low temperature, thus obtaining a reduced variation of said dynamic elastic modulus (E') as the temperatures increases, i.e., a reduced thermoplastic behaviour.

Moreover, the Applicant has noticed that it is possible to improve the tear resistance of a structural element of a tire obtained by crosslinking a crosslinkable elastomeric composition comprising at least one layered clay.

Moreover, the Applicant has noticed that it is possible to reduce the viscosity of green compounds comprising at least one layered clay.

According to a first aspect, the present invention therefore relates to a process for producing tyres for vehicle wheels, said process comprising the following steps:

obtaining at least one crosslinkable elastomeric material;
making a raw tyre by assembling a plurality of structural elements, at least one of which comprising said at least one crosslinkable elastomeric material;
molding and crosslinking the raw tyre so as to obtain a finished tyre;

wherein the step of obtaining said at least one crosslinkable elastomeric material includes:

(i) mixing at least one layered clay (a), at least one further filler (b) and at least one elastomer (c), so as at least partially delaminate said at least one layered clay within the at least one elastomer;
(ii) adding to the mixture prepared in step (i) at least one quaternary alkyl onium cation (d) selected from quaternary alkyl ammonium or quaternary alkyl phosphonium or mixture thereof.

According to one preferred embodiment, the tire according to the process of the invention comprises:

- a carcass structure, having opposite lateral edges associated with respective right-hand and left-hand bead structures;
- a tread band applied in a radially external position with respect to said carcass structure;
- a pair of sidewalls applied laterally on opposite sides with respect to said carcass structure.

Preferably, said bead structures comprise at least one bead core and at least one bead filler.

Preferably, said tire may further comprise:

- a tread underlayer applied in a radially internal position with respect to said tread band; and, optionally
- a pair of sidewall inserts extending radially between each of said bead structures and the corresponding lateral edge of said tread band; and optionally,
- a pair of anti-abrasive layers placed in an axially external position with respect to said bead structures.

Even more preferably, said tire may further comprise:

- at least one first layer of crosslinked elastomeric material applied in a radially internal position with respect to said carcass structure; and optionally
- at least one second layer of crosslinked elastomeric material applied between said at least one first layer of crosslinked elastomeric material and said carcass structure.

Each of said tread band, or said pair of sidewalls, or said tread underlayer, or said bead filler, or said pair of sidewall inserts, or said pair of anti-abrasive layers, as well as at least one of said first layer, or of said second layer may comprise at least one crosslinkable elastomeric material obtained according to the process of the invention.

The Applicant believes that the mixing of the the layered clay together with a filler in an elastomeric matrix allows to obtain at least partial delamination of the layered clay since the filler promotes the separation of the clay in different destacked layers and the polymer chains of the elastomeric matric intercalate between the thus separated layers. Then, the subsequent addition of the quaternary alkyl onium cation converts the clay from being hydrophilic in nature to being more compatible with the elastomeric matrix.

For the purposes of the present description and of the claims which follow, the term "phr" (acronym of "parts per hundred of rubber") means the parts by weight of a given component of the crosslinkable elastomeric composition

per 100 parts by weight of the elastomeric polymer(s).

The present invention, in at least one aspect thereof, may show one or more of the preferred characteristics hereinafter described.

According to a preferred embodiment, the process according to the invention is performed using an internal mixer of the type with tangential rotors (Banbury) or with interlocking rotors (Intermix), by sequentially carrying out steps (i) mixing in a mixer at least one layered clay (a), at least one further filler (b) and at least one elastomer (c) so as to at least partially delaminate said at least one layered clay within the at least one elastomer; and

(ii) adding to the mixture prepared in step (i) at least one quaternary alkyl onium cation (d) selected from quaternary alkyl ammonium or quaternary alkyl phosphonium or mixture thereof, without discharging the elastomeric mixture after step (i).

According to a further preferred embodiment, such process is performed using an internal mixer of the type with tangential rotors (Banbury) or with interlocking rotors (Intermix), by sequentially carrying out steps (i) and (ii), discharging the elastomeric mixture after step (i).

According to a further preferred embodiment, such process is performed using an open mixer of open-mill type by sequentially carrying out steps (i) and (ii).

According to a further preferred embodiment, such process is performed in continuous mixers of Ko-Kneader type (Buss), or of co-rotating or counter-rotating twin-screw type, by feeding at least one elastomer (c), at least one layered clay (a) and at least one further filler (b) in a first main feeding inlet and/or in a first or second downstream side feeder and by collecting the extrudate. The extrudate is then fed into the first main feeding inlet of an extruder and the at least one quaternary alkyl onium cation (d) selected from quaternary alkyl ammonium or quaternary alkyl phosphonium or mixture thereof is then fed in the first and/or the second downstream side feeder.

According to a further preferred embodiment, in the step (i) of the mentioned process, water could be added together with at least one elastomeric polymer (c), at least one layered clay (a) and at least one further filler (b).

According to a further preferred embodiment, said layered clay has a BET surface area, measured according to Standard ISO 5794-1:2005, of from about 1 $m^2/g$ to about 200 $m^2/g$, preferably of from about 20 $m^2/g$ to about 150 $m^2/g$, still more preferably of from about 10 $m^2/g$ to about 110 $m^2/g$.

According to a further preferred embodiment, said layered clay (a) has an average particle size (D50) lower than or equal to 70 micrometers, preferably lower than or equal to 30 micrometers, more preferably lower than or equal to 10 micrometers still more preferably lower than or equal to 5 micrometers.

The average particle size (D50) may be measured according to methods known in the art such as, for example, by means of a particle size analyzer (e.g., Sedigraph 5100 from Micrometrics Instrument Corp.): further details about said analysis are in the examples reported hereinafter.

According to one preferred embodiment, said layered clay (a) may be selected, for example, from phyllosilicates such as: smectites, for example, montmorillonite, bentonite, nontronite, beidellite, volkonskoite, hectorite, saponite, sauconite; vermiculite; halloisite; sericite; aluminate oxides; or mixtures thereof. Montmorillonite is particularly preferred. These layered material generally contains exchangeable cations such as sodium ($Na^+$), calcium ($Ca^{2+}$), potassium ($K^+$), or magnesium ($Mg^{2+}$), present at the interlayer surfaces.

Examples of layered clays which may be used according to the present invention and are available commercially are the products known by the name of Dellite® HPS, Dellite® A, from Laviosa Chimica Mineraria S.p.A.; Cloisite® Na, from Southern Clays; Bentonite® AG/3 from Dal Cin S.p.A.

According to one preferred embodiment, said at least one layered clay (a) is added in an amount of from 3 phr to 120 phr, preferably of from 5 phr to 80 phr.

According to one preferred embodiment, said further filler (b) may be added in an amount generally of from 0 phr to 120 phr, preferably of from 10 phr to 90 phr. The further filler may be selected from those commonly used for crosslinked manufactured products, in particular for tires, such as, for example, carbon black, silica, alumina, aluminosilicates, calcium carbonate, kaolin, or mixtures thereof.

Preferably the further filler is selected among carbon black, silica or carbon black modified with silica.

The types of carbon black which may be used according to the present invention may be selected from those conventionally used in the production of tires, generally having a surface area of not less than 20 $m^2/g$ (determined by STSA - statistical thickness surface area according to ISO 18852:2005), including carbon black of specific structure and carbon black modified with silica, i.e. carbon black at least partially coated with silica.

Examples of carbon black are CORAX® N330, N375, N326, N234, ECORAX® 1670, 1990 from Evonik; VULCAN® J, VULCAN® K, VULCAN® 7H from Cabot

The silica which may be used according to the present invention may generally be a pyrogenic silica or, preferably, a precipitated silica, with a BET surface area (measured according to Standard ISO 5794-1:2005) of from 50 $m^2/g$ to 500 $m^2/g$, preferably of from 70 $m^2/g$ to 200 $m^2/g$.

According to one preferred embodiment, said elastomeric polymer (c) may be selected, for example, from ($c_1$) diene elastomeric polymers which are commonly used in sulfur-crosslinkable elastomeric compositions, that are particularly suitable for producing tires, that is to say from elastomeric polymers or copolymers with an unsaturated chain having a glass transition temperature ($T_g$) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer ($c_1$) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, said elastomeric polymer (c) may be selected, for example, from ($c_2$) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

Mixtures of the abovementioned diene elastomeric polymers ($c_1$) with the abovementioned elastomeric polymers ($c_2$), may also be used.

The above reported elastomeric polymers (c) may optionally be functionalized by reaction with suitable terminating agents or coupling agents. In particular, the diene elastomeric polymers ($c_1$) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (c) may optionally include at least one functional group which may be selected, for example, from: carboxylic groups, carboxylate groups, anhydride groups, ester groups, epoxy groups, or mixtures thereof.

According to one preferred embodiment, said at least one quaternary alkyl onium cation (d) may be selected, for example, from quaternary ammonium or phosphonium salts having general formula (I):

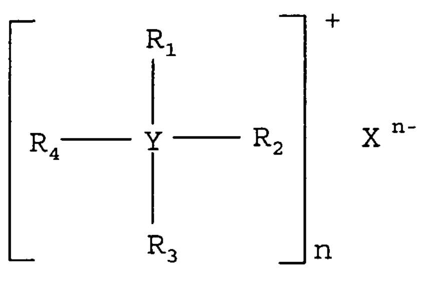 (I)

wherein:

- Y represents N or P;
- $R_1$, $R_2$, $R_3$ and $R_4$, which may be equal or different from each other, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulfur;
- $X^{n-}$ represents an anion such as the chloride ion, the sulphate ion or the phosphate ion;
- n represents 1, 2 or 3.

Said alkyl ammonium or alkyl phosphonium salt is capable of undergoing ion exchange reactions with the ions which, as already disclosed above, are present at the interlayers surfaces of the layered materials.

According to one preferred embodiment, said alkyl ammonium or alkyl phosphonium salt is present in the crosslinkable elastomeric composition in an amount of from 0 phr to 50 phr, preferably of from 0.5 phr to 20 phr, more preferably of from 1 phr to 10 phr.

Examples of alkyl ammonium or alkyl phosphonium salt which may be used according to the present invention and are available commercially are the products known by the name of Arquad® HC Pastilles, Arquad® 2HT-75, Arquad® MC-50, Duoquad® T-50, from Akzo Nobel, or Bardac® LF 70 from Lonza.

According to a preferred embodiment, the ratio (r) between the moles of quaternary alkyl onium cation (d) and the moles of exchangeable alkaline and alkaline-earth cations present in the used amount of the layered clay (a), should be as follows: $1.2 > r > 0.1$, more preferably $0.9 > r > 0.3$. even more preferably $0.8 > r > 0.5$.

The moles of exchangeable alkaline and alkaline-earth cations present in the used amount of the layered clay are calculated by multiply the value of the cationic exchange capacity (C.E.C.) by the value expressing the used amount of the layered clay, where cationic exchange capacity is expressed in equivalents/weight unit.

When one further filler comprising silica is present, a silane coupling agent (e) may be advantageously incorporated capable of interacting with silica and of linking it to the elastomeric polymer(s) during the vulcanization.

According to one preferred embodiment, said silane coupling agent (e) may be selected from those having at least one hydrolizable silane group which may be identified, for example, by the following general formula (II):

$$(R)_3Si\text{-}C_nH_{2n}\text{-}X \qquad \text{(II)}$$

wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6, extremes included; X is a group selected from: nitroso, mercapto, amino, epoxide, vinyl, imide, chloro, $-(S)_mC_nH_{2n}\text{-}Si\text{-}(R)_3$, or -S-COR, wherein m and n are integers of from 1 to 6, extremes included and the groups R are defined as above.

Among the silane coupling agents (e) that are particularly preferred are bis(3-triethoxysilyl-propyl)tetrasulphide, bis(3-triethoxysilylpropyl)-disulphide, 3-octanoylthio-1-propyltriethoxysilane, 3-aminopropyltriethoxysilane. Said coupling agents may be used as such or as a suitable mixture with an inert filler (for example, carbon black) so as to facilitate their incorporation into the elastomeric polymer.

According to one preferred embodiment, said silane coupling agent (e) is present in the crosslinkable elastomeric composition in an amount of from 0 phr to 25 phr, preferably of from 0.5 phr to 10 phr, more preferably of from 1 phr to 5 phr.

According to one preferred embodiment, (f) at least one methylene donor compound and (g) at least one methylene acceptor compound may be added. Said at least one methylene donor compound (f) may be used in amounts of from 0.1 phr to 15 phr, preferably from 0.3 phr to 10 phr. Said at lest one methylene acceptor compound(g) is added in amounts of from 0.4 phr to 20 phr, preferably from 0.8 phr to 15 phr.

According to one preferred embodiment, said at least one methylene donor compound (f) may be selected, for example, from: hexamethylenetetramine (HMT); hexamethoxymethylmelamine (HMMM); formaldehyde; paraformaldehyde; trioxane; 2-methyl-2-nitro-1-propanal; substituted melamine resins such as N-substituted oxymethylmelamine resins; glycoluril compounds such as tetramethoxymethyl glycoluril; urea-formaldehyde resins such as butylated urea-formaldehyde resins; or mixtures thereof. Hexamethylenetetramine (HMT) or hexamethoxymethylmelamine (HMMM) are particularly preferred. Said at least one methylene donor compound (f) may be used as such, or as a suitable mixture with an inert filler such as, for example, silica.

According to one preferred embodiment, said at least one methylene acceptor compound (g) may be selected, for example, from: resorcinol; catechol; hydroquinone; pyrogallol; phloroglucinol; 1-naphthol; 2-naphthol; phenolic resins obtained from the condensation of an optionally substituted phenol with an aldehyde such as, for example, formaldehyde, acetaldehyde, furfural (for example, resorcinol-formaldehyde resin); modified resorcinol such as, for example, the product Ulti-Pro® 100 from Indspec Chemical Corp.; or mixtures thereof. Resorcinol is particularly preferred.

Said at least one methylene donor compound (f) and said at least one methylene acceptor compound (g) may also be added in the process according to the invention in the precondensed form (condensed before being added to

said crosslinkable elastomeric composition) such as, for example: resorcinol-formaldeyde resin; substituted melamine resins such as N-substituted oxymethylmelamine resins; or mixtures thereof. Said precondensed resins are able to self-crosslink as they contain different reactive groups.

According to a further preferred embodiment, said crosslinkable elastomeric composition may further comprise a non cationic surfactant (h).

According to a further preferred embodiment, a non-cationic surfactant (h) could be added together with at least one elastomeric polymer (c), at least one layered clay (a) and at least one active filler (b).

According to a further preferred embodiment, a further silane (m) could be added together with at least one elastomeric polymer (c), at least one layered clay (a) and at least one further filler (b).

According to a further preferred embodiment, a non-cationic surfactant and a silane could be added together with at least one elastomeric polymer (c), at least one layered clay (a) and at least one further filler (b).

Examples of non cationic surfactants, are saturated and unsaturated fatty acids, containing one or more carboxylic groups. Examples of saturated fatty acids containing one carboxylic group are are: stearic acid, arachidic acid, palmitic acid.

Examples of monounsaturated fatty acids containing one carboxylic group are: oleic acid, erucic acid, palmitoleic acid, miristoleic acid. Examples of polyunsaturated fatty acids containing one carboxylic group are: linoleic acid, linolenic acid, arachidonic acid, eicosapentaenoic acid, docosahexaenoic acid. Examples of di-carboxylic acids are: pentanedioic acid, hexanedioic acid, heptanedioic acid, octanedioic acid, nonanedioic acid, decanedioic acid

The tyre produced according to the process of the invention may be subjected to crosslinking according to known techniques, in particular with sulfur-based vulcanizing systems commonly used for elastomeric polymer(s). To this end, in the composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, $ZnCO_3$, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, $Pb_3O_4$, $PbO_2$, or mixtures thereof.

Accelerators that are commonly used may be selected, for example, from: dithiocarbamates, guanidine, thiourea, thiazoles, sulphenamides, thiurams, amines, xanthates, or mixtures thereof.

Said crosslinkable elastomeric material may comprise other commonly used additives selected on the basis of the specific application for which the material is intended. For example, the following may be added to said crosslinkable elastomeric material: antioxidants, anti-ageing agents, plasticizers, adhesives, anti-ozone agents, modifying resins, fibres, or mixtures thereof.

Moreover, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric material. The amount of plasticizer generally ranges of from 0 phr to 70 phr, preferably of from of 5 phr to 30 phr.

The process for producing the tire according to the present invention may be carried out according to techniques and using apparatus that are known in the art.

**Brief description of the drawings**

The present invention will now be illustrated in further detail by means of illustrative embodiments, with reference to the attached Figure 1 (Fig. 1), which is a view in cross-section of a portion of tire for vehicle wheels.

**Detailed description of the preferred embodiments**

With reference to Fig. 1, "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures (103) comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass turn-up (101a) as shown in Fig. 1.

Alternatively, the conventional bead core (102) may be replaced with at least one annular insert formed from rubberized wires arranged in concentric coils (not represented in Fig. 1) (see, for example, European Patent Applications

EP 928,680 or EP 928,702).

The carcass ply (101) usually comprises a plurality of reinforcing cords arranged parallel to each other and at least partially coated with a layer of a crosslinked elastomeric composition. These reinforcing cords are usually made of textile fibers, for example rayon, nylon or polyethylene terephthalate, or of steel wires stranded together, coated with a metal alloy (for example, copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The bead core (102) is enclosed in a bead structure (103), defined along an inner circumferential edge of the tire (100), with which the tire engages on a rim (not represented in Fig. 1) forming part of a vehicle wheel. The space defined by each carcass turn-up (101a) contains a bead filler (104).

An anti-abrasive layer (105), is usually placed in an axially external position relative to the carcass turn-up (101a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees, typically in a range of from 0 to 5 degrees relative to a circumferential direction, usually coated with a crosslinked elastomeric composition.

A tread band (109), whose lateral edges are connected to the sidewalls (108), is applied circumferentially in a position radially external to the belt structure (106).

Externally, the tread band (109) has a rolling surface (109a) designed to come into contact with the ground. Circumferential grooves which are connected by transverse notches (not represented in Fig. 1) so as to define a plurality of ribs and/or blocks of various shapes and sizes distributed over the rolling surface (109a) are generally made in this surface (109a), which is represented for simplicity in Fig. 1 as being smooth.

A sidewall (108), is also applied externally onto the carcass ply (101), this sidewall extending, in an axially external position, from the bead (103) to the end of the belt structure (106).

A tread underlayer (111), may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a first layer (112), generally known as a "liner", which provides the necessary impermeability to the inflation air of the tire, may also be provided in an inner position relative to the carcass ply (101).

In addition, a second layer (not shown in Fig. 1) generally known as a "underliner", may be placed between the liner (112) and the carcass ply (101).

The finished tyre shown in figure 1 can be produced according to methods and using apparatus that are known in the art, as described, for example, in European Patents EP 199,064, or in United States Patent US 4,872,822 or US 4,768,937. Typically, said process includes manufacturing a raw (or green) tyre by assembling the various structural elements above described on one or more supports (e.g. one or more drums), and subsequently moulding and vulcanizing the raw tire.

At least one of the above structural elements comprises a crosslinkable elastomeric composition including a layered clay. The crosslinkable elastomeric composition is prepared by mixing at least one layered clay, at least one further filler and at least one elastomer, so as at least partially delaminate said at least one layered clay. Then, at least one quaternay alkyl onium cation, selected from quaternary alkyl ammonium or quaternary alkyl phosphonium or mixture thereof, is added to the mixture so prepared. Preferably, the at least one structural element may comprise at least one of the following: tread band, or said pair of sidewalls, or said tread underlayer, or said bead filler, or said pair of sidewall inserts, or said anti-abrasive layer. The crosslinkable elastomeric composition obtained as disclosed above can also be used for other rubberized elements of the tire, such as, for example, the composition used for rubberizing the reinforcing cords used in the tire.

In the following, a number of preparation examples of the crosslinkable elastomeric composition comprising a

layered clay will be illustrated. These examples are given for purely indicative purposes and without any limitation of this invention. A series of results of tests performed by the Applicant and showing the improved properties of the obtained elastomeric compositions will be also illustrated.

In particular, the crosslinkable elastomeric compositions disclosed below were subjected to "scorch time" measurement, at 127°C, according to Standard ISO 289-2:1994.

The static mechanical properties, according to Standard ISO 37:1994, were measured on samples of the elastomeric compositions vulcanized at 170°C, for 10 min.

The dynamic mechanical properties were measured using an Instron dynamic device in the traction-compression mode, according to the following methods. A test piece of the crosslinked elastomeric composition (vulcanized at 170°C, for 10 min) having a cylindrical form (length = 25 mm; diameter = 12 mm), compression-preloaded up to a 10% longitudinal deformation with respect to the initial length, and kept at the prefixed temperature (23°C, 70°C, or 100°c) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

The dynamic mechanical properties obtained using a Monsanto R.P.A. 2000 rheometer were measured according to the following method. Cylindrical test specimens with weights in the range of from 4.5 g to 5.5 g were obtained by punching from the crosslinkable elastomeric composition, vulcanized at 170°C, for 10 min and were then subjected to the measurement of (G') at 70°C, frequency 1 Hz, deformation 3% and 10%.

Furthermore, the crosslinkable elastomeric compositions were subjected to adhesion (peeling) test, as described in the following.

Two-layer test pieces were prepared for measuring the peel force, by superimposing two layers of the same non-crosslinked elastomeric composition, followed by crosslinking (at 170°C, for 10 minutes). In detail, the test pieces were prepared as follows. Each elastomeric composition was calendered so as to obtain a sheet with a thickness equal to 3 mm ± 0.2 mm. From the sheet thus produced plates were obtained with dimensions equal to 220 mm (± 1.0 mm) x 220 mm (± 1.0 mm) x 3 mm (± 0.2 mm), marking the direction of the calendering. One side of each plate was protected with a polyethylene sheet, while a reinforcing fabric made of rubberized polyamide with a thickness of 0.88 mm ± 0.05 mm was applied to the opposite side, orienting the strands in the direction of calendering and rolling the composite thus assembled so as to achieve good adhesion between the fabric and the non-crosslinked elastomeric compositon. After cooling, sheets were produced from the composite thus obtained, by punching, these sheets having dimensions equal to 110 mm (± 1.0 mm) x 25 mm (± 1.0 mm) x 3.88 mm (± 0.05 mm), taking care to ensure that the major axis of each sheet was oriented in the direction of the strands of the fabric.

A first sheet made of the crosslinkable elastomeric composition obtained as disclosed above (i.e., the crosslinkable elastomeric composition obtained in Examples 1-4) constituting the first layer was placed in a mould, the polyethylene film was removed, two Mylar® strips acting as lateral separators (thickness = 0.2 mm) were applied laterally and a third strip again made of Mylar® (thickness = 0.045 mm) was applied to one end of the sheet in order to create a short free section not adhering to the second layer. A second sheet made of the same crosslinkable elastomeric composition above disclosed, from which the polyethylene film was previuosly removed, was then applied to the first sheet thus prepared, constituting the second layer (the first layer and the second layer being made of the same crosslinkable elastomeric composition), thus obtaining a test piece which was then crosslinked by heating at 170°C, for 10 min, in a press.

Subsequently, the test pieces crosslinked as described above were conditioned at room temperature (23°C ± 2°C) for at least 16 hours and were then subjected to the peel test using a Zwick Z005 dynamometer, the clamps of which were applied to the free section of each layer. A traction speed equal to 260 mm/min ± 20 mm/min was then applied and the peel force values were thus measured, expressed in Newtons (N), as the average value calculated for two test pieces. The same tests were carried out on the test pieces crosslinked as described above and conditioned at 100°C for at least 16 hours: the peel force values were thus measured, expressed in Newtons (N), as the average value calculated for two test pieces.

<u>SAMPLES 1 - 4</u>

SAMPLE 1 - Comparative

The elastomeric material of Sample 1 in Table 1 was prepared as follows (the amounts of the various components are given in phr). In Step 1.0, Isoprene Rubber (IR) was introduced in a Banbury® type internal mixer (model Pomini PL 1.6) at 70°±5C and was masticated for 30 seconds with rotors rotating at 75 rpm. Carbon Black was then fed and mixing was carried out for 2,5 minutes (Step 1.1). Then, (Step 1.2), Silane and Pthalic anhydride were introduced into the mixer and mixing was performed for further 2 minutes, after which the masterbatch was discharged at 145°±5C. In Phase 2, the masterbatch, Stearic acid, Zinc oxide and 6PPD were introduced into the mixer at 70°±5C, mixed for about

3,5 minutes and finally discharged at 125±5°C. Productive mixing was performed on a two roll mill by adding Sulfur, DCBS and PVI to the masterbatch, at 50-70°C for about 5 minutes.

SAMPLE 2 - Comparative

Sample 2 was prepared as Sample 1, except that in Step 1.1 the organically modified layered clay (Dellite 67G), i.e. a pre-intercalated clay of a hydrophobic nature where 45 wt % of di(hydrogenated tallow)-dimethylammonium is present, was added to the isoprene rubber together with Carbon Black.

SAMPLE 3 - Comparative

Sample 3 was prepared as Sample 1, except that in Step 1.1 the nanosized layered clay (DELLITE HPS) and the ammonium salt (Arquad HC) were added to the isoprene rubber together with carbon black.

SAMPLE 4 - Invention

Sample 4 was prepared as Sample 1, except that in Step 1.1 the nanosized layered clay (DELLITE HPS) was added to the isoprene rubber together with carbon black and in Step 1.2 the ammonium salt (Arquad HC) was fed to the internal mixer.

TABLE 1

| Sample | 1 (*) | 2 (*) | 3 (*) | 4 |
|---|---|---|---|---|
| Phase - Step 1.0 | | | | |
| IR | 100 | 100 | 100 | 100 |
| Phase 1 - Step 1.1 | | | | |
| Carbon Black | 60.0 | 50.0 | 50.0 | 50.0 |
| Dellite® 67G | 0 | 8.3 | 0 | 0 |
| Dellite® HPS | 0 | 0 | 4.8 | 4.8 |
| Arquad HC | 0 | 0 | 3.5 | 0 |
| Phase 1 - Step 1.2 | | | | |
| Arquad HC | 0 | 0 | 0 | 3.5 |
| Phase 1 - Step 1.3 | | | | |
| Silane NXT | 0.8 | 0.8 | 0.8 | 0.8 |
| Phtalic Anhydride | 1.0 | 1.0 | 1.0 | 1.0 |
| Phase 2 | | | | |
| ZnO | 4.0 | 4.0 | 4.0 | 4.0 |
| Stearic acid | 2.0 | 2.0 | 2.0 | 2.0 |
| 6PPD | 2.0 | 2.0 | 2.0 | 2.0 |
| Productive Mixing | | | | |
| Sulfur | 2.0 | 2.0 | 2.0 | 2.0 |
| DCBS | 1.8 | 1.8 | 1.8 | 1.8 |

(continued)

| Productive Mixing | | | | |
|---|---|---|---|---|
| PVI | 0.3 | 0.3 | 0.3 | 0.3 |

(*): comparative.
IR: cis-1,4-polyisoprene, SKI3 from Nizhnekamskneftechim Export;
Carbon Black: N326, from Cabot.
Dellite® 67G: from Laviosa Chimica Mineraria S.p.A.; 45 wt % of di(hydrogenated tallow)-dimethylammonium is present.
Dellite® HPS: from Laviosa Chimica Mineraria S.p.A., with a cationic exchange capacity equal to 128 mEq/100 g.
Arquad® HC Pastilles: di(hydrogenated tallow)-dimethylammonium chloride (Akzo Nobel) was purchased from Akzo Nobel with 98.5 as a typical value of chemical purity and the following alkyl chain distribution (as wt %) of the tallow substituents: < $C_{12}$ = 1, $C_{14}$ = 4, $C_{16}$ = 31, $C_{18}$ = 64.
6PPD: N-(1,3-dimethylbuthyl)-N-phenyl-p-phenylenediamine, from Crompton
NXT Silane: 3-octanoylthio-1-propyltriethoxysilane, from Momentive
ZnO: from Zincol Ossidi
Stearic Acid: from Sogis
Sulfur: from Solfotecnica
DCBS: benzothiazyl-2-dicydohexyl-sulfenamide, Vulkacit® DZ/EGC, from Lanxsess
PVI: pre-vulcanization inhibitor: cyclohexyl-thiopthalimide, Santogard PVI, from Flexsys

Characterization of the crosslinkable elastomeric materials of Table 1.

Crosslinkable elastomeric materials of Table 1 were characterised applying the methods disclosed above: results are reported in the following Table 2.

Data in Table 2 show that the crosslinkable elastomeric material prepared in Sample 4 has superior properties versus the crosslinkable elastomeric materials prepared according to Samples 1-3. All the elastomeric materials containing an organoclay show better elongation at break with respect to material prepared according to Sample 1, filled only with Carbon Black. However, the crosslinkable elastomeric material prepared in Sample 4 is endowed with a Mooney viscosity lower with respect to both the organoclay free and to the organoclay based compositions. Moreover, the crosslinkable elastomeric material prepared in Sample 4 shows the lowest thermoplasticity and the lowest Tan Delta with respect to any of the other materials, thus to any of the other organoclay based materials. The crosslinkable elastomeric material prepared in Sample 4 also shows the lowest Delta G', i.e. the lowest Payne Effect, with respect to any of the other organoclay based materials. Results related to peeling are also better for the elastomeric material prepared according to Sample 4.

TABLE 2

| SAMPLE | 1 (*) | 2 (*) | 3 (*) | 4 |
|---|---|---|---|---|
| Mooney (MU) (100°C, 1+4) | 75.8 | 61.7 | 62.6 | 59 |
| STATIC MECHANICAL PROPERTIES | | | | |
| 50% Modulus (CA0.5)(MPa) | 1.30 | 1.38 | 1.33 | 1.31 |
| 100% Modulus (CA1)(MPa) | 2.25 | 2.33 | 2.24 | 2.24 |
| 300% Modulus (CA3)(MPa) | 11.63 | 9.57 | 9.96 | 9.92 |
| Stress at break (MPa) | 20.94 | 20.27 | 21.90 | 21.72 |
| Elongation at break (%) | 491.8 | 534.6 | 547.2 | 545.5 |
| DYNAMIC MECHANICAL PROPERTIES (Instron) | | | | |
| E' (10°) | 7.957 | 9.207 | 8.430 | 7.825 |
| E' (23°) | 6.952 | 8.103 | 7.469 | 6.996 |
| E' (70°) | 5.290 | 5.870 | 5.610 | 5.568 |
| ΔE' (10°C - 70°C) | 2.666 | 3.336 | 2.820 | 2.258 |

(continued)

| DYNAMIC MECHANICAL PROPERTIES (Instron) | | | | |
|---|---|---|---|---|
| ΔE' [(10°C - 70°C)/10°C]% | 33.5% | 36.2% | 33.4% | 28.9% |
| Tan delta (10°) | 0.287 | 0.293 | 0.272 | 0.257 |
| Tan delta (23°) | 0.218 | 0.251 | 0.219 | 0.205 |
| Tan delta (70°) | 0.150 | 0.180 | 0.160 | 0.143 |
| STRAIN SWEEP (10 Hz 70°C) | | | | |
| G' (3%) (MPa) | 2.00 | 1.90 | 1.94 | 1.87 |
| Delta G' (3% - 10%) (MPa) | 0.56 | 0.60 | 0.60 | 0.55 |
| Peel Force (N) (23 °C) | 185 | 113 | 137 | 186 |
| Peel Force (N) (100 °C) | 141 | 98 | 94 | 152 |
| (*): comparative. | | | | |

SAMPLES 5 - 8

Preparation of the elastomeric materials

SAMPLE 5 - Comparative

The elastomeric material of Sample 5 in Table 3 was prepared as follows (the amounts of the various components are given in phr). In Step 1.0, Isoprene Rubber (IR) was introduced in a Banbury® type internal mixer (model Pomini PL 1.6) at 70±5°C and was masticated for 30 seconds with rotors rotating at 75 rpm. Carbon Black and resorcinol were then fed and mixing was carried out for about 2.5 minutes (Step 1.1). Then the remaining Carbon Black was added and after further 2 minutes of mixing (Step 1.2), the masterbatch was discharged at 145±5°C. In Phase 2, the masterbatch, Stearic acid, Zinc oxide and 6PPD were introduced into the internal mixer at 70±5°C and mixed for about 3,5 minutes. The masterbatch was finally discharged at 125±5°C. Productive mixing was performed on a two roll mill by adding Sulfur, HMT and DCBS to the masterbatch, at 50-70°C for about 5 minutes.

SAMPLE 6 - Comparative

Sample 6 was prepared as Sample 5, except that in Step 1.1 the nanosized layered clay (DELLITE HPS), the ammonium salt (Arquad HC) and silane TESPT were added to the isoprene rubber together with carbon black and resorcinol.

SAMPLE 7 - Invention

Sample 7 was prepared as Sample 5, except that in Step 1.1 the nanosized layered clay (DELLITE HPS) and silane TESPT were added to the isoprene rubber together with carbon black and resorcinol, and that in Step 1.2 the ammonium salt (Arquad HC) was fed to the internal mixer together with the remaining Carbon Black.

SAMPLE 8 - Invention

Sample 8 was prepared as Sample 5, except that in Step 1.1 the nanosized layered clay (DELLITE HPS) and silane TESPT were added to the isoprene rubber together with carbon black and resorcinol, and that in Step 1.2 the ammonium salt (Arquad HC) and water were fed to the internal mixer together with the remaining Carbon Black.

TABLE 3

| SAMPLES | 5 (*) | 6 (*) | 7 | 8 |
|---|---|---|---|---|
| Phase 1 - Step 1.0 | | | | |
| IR | 100 | 100 | 100 | 100 |

(continued)

| | | | | |
|---|---|---|---|---|
| Phase 1 - Step 1.1 | | | | |
| Carbon Black | 68 | 63 | 63 | 63 |
| DELLITE HPS | 0 | 2.88 | 2.88 | 2.88 |
| ARQUAD HC | 0 | 2.12 | 0 | 0 |
| TESPT | 0 | 2 | 2 | 2 |
| Resorcinol | 1.3 | 1.3 | 1.3 | 1.3 |
| Phase 1 - Step 1.2 | | | | |
| ARQUAD HC | 0 | 0 | 2.12 | 2.12 |
| Carbon Black | 2 | 2 | 2 | 2 |
| $H_2O$ | 0 | 0 | 0 | 0.85 |
| Phase 2 | | | | |
| Stearic Acid | 2 | 2 | 2 | 2 |
| ZnO | 7 | 7 | 7 | 7 |
| 6PPD | 2 | 2 | 2 | 2 |
| Productive Mixing | | | | |
| HMT | 0.4 | 0.4 | 0.4 | 0.4 |
| DCBS | 1.5 | 1.5 | 1.5 | 1.5 |
| Sulphur | 4.45 | 4.45 | 4.45 | 4.45 |

(*): comparative.
IR: cis-1,4-polyisoprene, SKI3 from Nizhnekamskneftechim Export;
Carbon Black: N326, from Cabot
Dellite® HPS: from Laviosa Chimica Mineraria S.p.A., with a cationic exchange capacity equal to 128 mEq/100 g.
Arquad® HC Pastilles: di(hydrogenated tallow)-dimethylammonium chloride (Akzo Nobel) was purchased from Akzo Nobel with 98.5 as a typical value of chemical purity and the following alkyl chain distribution (as wt %) of the tallow substituents: < $C_{12}$ = 1, $C_{14}$ = 4, $C_{16}$ = 31, $C_{18}$ = 64.
TESPT: bis(3-triethoxysylilpropyl)tetrasulfide from Degussa-Evonik
HMT: hexamethylenetetramine, Cohedur H30 from Lanxess (DE)
Resorcinol: from Sumitomo Chemical Corporation (JP)
6PPD: N-(1,3-dimethylbuthyl)-N-phenyl-p-phenylenediamine, from Crompton
ZnO: from Zincol Ossidi
Stearic Acid: from Sogis
Sulfur: from Solfotecnica
DCBS: benzothiazyl-2-dicyclohexyl-sulfenamide, Vulkacit® DZ/EGC, from Lanxsess

Characterization of the crosslinkable elastomeric materials of Table 3.

Crosslinkable elastomeric materials of Table 3 were characterised applying the methods disclosed above: results are reported in the following Table 4.

TABLE 4

| SAMPLES | 5 (*) | 6 (*) | 7 | 8 |
|---|---|---|---|---|
| STATIC MECHANICAL PROPERTIES | | | | |
| Mooney (MU) (100°C, 1+4) | 88.5 | 84.6 | 79.4 | 80.4 |
| 100% Modulus (CA1) (MPa) | 2,74 | 4,53 | 4,08 | 4,02 |
| 300% Modulus (CA3) (MPa) | 14,32 | 17,62 | 16,12 | 16,16 |

(continued)

| SAMPLES | 5 (*) | 6 (*) | 7 | 8 |
|---|---|---|---|---|
| STATIC MECHANICAL PROPERTIES | | | | |
| Stress at break (MPa) | 21,14 | 20,23 | 18,28 | 15,65 |
| Elongation at break (%) | 440,3 | 370,3 | 363,0 | 320,6 |
| IRHD hardness (23°C) | 69,3 | 83,3 | 82,2 | 79,9 |
| IRHD hardness (70°C) | 65,1 | 80,8 | 79,3 | 76,9 |
| DYNAMIC MECHANICAL PROPERTIES | | | | |
| E' (10°C) | 10,251 | 16,587 | 14,148 | 13,543 |
| E' (23°C) | 8,942 | 14,314 | 12,433 | 11,812 |
| E' (70°C) | 6,969 | 11,532 | 10,090 | 9,763 |
| ΔE' (10°C - 70°C) | 3,282 | 5,055 | 4,058 | 3,780 |
| ΔE ' [(10°C - 70°C)/10°C]% | 32% | 30.4% | 28.7% | 27.9% |
| Tan delta (10°C) | 0,261 | 0,219 | 0,212 | 0,211 |
| Tan delta (23°C) | 0,211 | 0,177 | 0,167 | 0,166 |
| Tan delta (70°C) | 0,131 | 0,110 | 0,119 | 0,101 |
| G' (3,2%) [MPa] | 2,309 | 3,650 | 3,082 | 2,883 |
| ΔG'(3,2-10)[MPa] | 0,633 | 1,172 | 0,973 | 0,844 |
| Peel Force (N) (23 °C) | 154 | 112 | 166 | 137 |
| Peel Force (N) (100 °C) | 133 | 68 | 145 | 121 |
| (*): comparative. | | | | |

Data in Table 4 show that the crosslinkable elastomeric materials prepared as Sample 7 and as Sample 8 are endowed with a lower viscosity with respect to the materials prepared in the comparative Samples, both with and without the organomodified nanosized layered clay. Moreover, the crosslinkable elastomeric materials prepared as Sample 7 and as Sample 8 show similar tensile properties with respect to the material prepared as comparative Sample 6, whereas the dynamic mechanical properties are clearly improved . Infact, the organomodified nanosized layered clay brings about a substantial reduction of the thermoplasticity of the materials of Samples 7 and 8: this means that the dynamic modulus (E') can be improved at high temperature, with respect to the material prepared in comparative Sample 5 that does not contain any nanosized layered clay, without observing an undesired upsurge of the (E') values at low temperatures, as it can be observed in the elastomeric material prepared in comparative Sample 6. Improvement of dynamic mechanical properties expressed through the shear modulus can be observed as well: elastomeric materials of Samples 7 and 8 are characterized by remarkably lower values of DeltaG', i.e. by a remarkably lower Payne Effect, with respect to the material prepared in comparative Sample 6.

SAMPLES 9 - 13

Preparation of the elastomeric materials

SAMPLE 9 - Comparative

The elastomeric material of Sample 9 in Table 5 was prepared following the same procedure adopted for Sample 1 in Table 1 (the amounts of the various components are given in phr).

SAMPLE 10 - Comparative

The elastomeric material of Sample 10 in Table 5 was prepared as Sample 9, except that in Step 1.1, Arquad HC was added to isoprene rubber together with carbon black and the nanosized layered clay DELLITE HPS.

SAMPLE 11 - Invention

Sample 11 was prepared as Sample 9, except that in Step 1.1 the nanosized layered clay (DELLITE HPS) was added to the isoprene rubber together with Carbon Black and that in Step 1.2 the ammonium salt Arquad HC was fed to the internal mixer. The molar amount of the ammonium salt was equal to the moles of exchangeable cations present in the nanosized layered clay DELLITE HPS.

SAMPLE 12 - Invention

Sample 12 was prepared as Sample 11, except that the molar amount of the ammonium salt fed to the internal mixer in Step 1.2 was the 75% of the moles of exchangeable cations present in the nanosized layered clay DELLITE HPS.

SAMPLE 13 - Invention

Sample 13 was prepared as Sample 11, except that the molar amount of the ammonium salt fed to the internal mixer in Step 1.2 was the 60% of the moles of exchangeable cations present in the nanosized layered clay DELLITE HPS.

TABLE 5

| SAMPLES | 9 (*) | 10 (*) | 11 | 12 | 13 |
|---|---|---|---|---|---|
| Phase 1 - Step 1.0 | | | | | |
| IR | 100 | 100 | 100 | 100 | 100 |
| Phase 1 - Step 1.1 | | | | | |
| Carbon Black | 60.0 | 50.0 | 50.0 | 50.0 | 50.0 |
| Dellite® HPS | 0 | 4.8 | 4.8 | 4.8 | 4.8 |
| Arquad HC | 0 | 3.5 | | | |
| Phase 1 - Step 1.2 | | | | | |
| Arquad HC | 0 | 0 | 3.5 | 2.6 | 2.1 |
| Phase 1 - Step 1.3 | | | | | |
| Silane NXT | 0.8 | 0.8 | 0.8 | 0.8 | 0.8 |
| Phtalic anhydride | 1.0 | 1.0 | 1.0 | 1.0 | 1.0 |
| Phase 2 | | | | | |
| ZnO | 4.0 | 4.0 | 4.0 | 4.0 | 4.0 |
| Stearic acid | 2.0 | 2.0 | 2.0 | 2.0 | 2.0 |
| 6PPD | 2.0 | 2.0 | 2.0 | 2.0 | 2.0 |
| Productive Mixing | | | | | |
| Sulfur | 2.0 | 2.0 | 2.0 | 2.0 | 2.0 |
| DCBS | 1.8 | 1.8 | 1.8 | 1.8 | 1.8 |

(continued)

| Productive Mixing | | | | | |
|---|---|---|---|---|---|
| PVI | 0.3 | 0.3 | 0.3 | 0.3 | 0.3 |

(*): comparative.
IR: cis-1,4-polyisoprene, SKI3 from Nizhnekamskneftechim Export;
Carbon Black: N326, from Cabot
Dellite® HPS: from Laviosa Chimica Mineraria S.p.A., with a cationic exchange capacity equal to 128 mEq/100 g.
Arquad® HC Pastilles: di(hydrogenated tallow)-dimethylammonium chloride (Akzo Nobel) was purchased from Akzo Nobel with 98.5 as a typical value of chemical purity and the following alkyl chain distribution (as wt %) of the tallow substituents: < $C_{12}$ = 1, $C_{14}$ = 4, $C_{16}$ = 31, $C_{18}$ = 64.
NXT Silane: 3-octanoylthio-1-propyltriethoxysilane, from Momentive
Phtalic anhydride: from Aldrich
ZnO: from Zincol Ossidi
Stearic Acid: from Sogis
6PPD: N-(1,3-dimethylbuthyl)-N-phenyl-p-phenylenediamine, from Crompton
Sulfur: from Solfotecnica
DCBS: benzothiazyl-2-dicyclohexyl-sulfenamide, Vulkacit® DZ/EGC, from Lanxsess
PVI: pre-vulcanization inhibitor: cyclohexyl-thiopthalimide, Santogard PVI, from Flexsys

Characterization of the crosslinkable elastomeric materials of Table 5.

Crosslinkable elastomeric materials of Table 5 were characterised applying the methods disclosed above: results are reported in the following Table 6.

TABLE 6

| SAMPLE | 9 (*) | 10 (*) | 11 | 12 | 13 |
|---|---|---|---|---|---|
| Mooney (MU) (100°C, 1+4) | 63.9 | 62.8 | 58.1 | 59.5 | 58.6 |
| STATIC MECHANICAL PROPERTIES | | | | | |
| 50% Modulus (CA0.5)(MPa) | 1.32 | 1.36 | 1.25 | 1.29 | 1.32 |
| 100% Modulus (CA1)(MPa) | 2.34 | 2.26 | 2.13 | 2.20 | 2.30 |
| 300% Modulus (CA3)(MPa) | 12.35 | 9.85 | 9.43 | 9.80 | 10.40 |
| Stress at break (MPa) | 20.70 | 21.80 | 20.30 | 20.47 | 20.19 |
| Elongation at break (%) | 479.5 | 540.8 | 538.2 | 528.2 | 507.2 |
| DYNAMIC MECHANICAL PROPERTIES (Instron) | | | | | |
| E' (10°) | 8.580 | 8.460 | 7.952 | 7.785 | 7.874 |
| E' (23°) | 7.340 | 7.478 | 7.154 | 6.963 | 7.054 |
| E' (70°) | 5.310 | 5.550 | 5.618 | 5.555 | 5.671 |
| ΔE' (10°C - 70°C) | 3.270 | 2.910 | 2.334 | 2.230 | 2.203 |
| ΔE' [(10°C - 70°C)/10°C]% | 38.1% | 34.4% | 29.4% | 28.6% | 28.0% |
| Tan delta (10°) | 0.273 | 0.276 | 0.244 | 0.236 | 0.231 |
| Tan delta (23°) | 0.230 | 0.225 | 0.195 | 0.190 | 0.185 |
| Tan delta (70°) | 0.148 | 0.170 | 0.133 | 0.127 | 0.139 |
| STRAIN SWEEP (10 Hz 70°C) | | | | | |
| G' (3%) (MPa) | 1.88 | 1.98 | 1.52 | 1.51 | 1.56 |
| Delta G' (3% - 10%) (MPa) | 0.39 | 0.65 | 0.35 | 0.33 | 0.32 |
| Peel Force (N) (23 °C) | 191 | 97 | 185 | 192 | 176 |

(continued)

| STRAIN SWEEP (10 Hz 70°C) | | | | | |
|---|---|---|---|---|---|
| Peel Force (N) (100 °C) | 158 | 83 | 161 | 173 | 164 |
| (*): comparative. | | | | | |

Data in Table 6 show that the use of an ammonium cation in a molar amount lower with respect to the moles of the exchangeable cations present in the nanosized layered clay brings about the same improvement observed in the elastomeric material when the molar amount of the employed ammonium cation is equal to the moles of the exchangeable cations present in the nanosized layered clay. This can be clearly seen by comparing data referring to comparative Sample 10 and data referring to Samples prepared according to the present invention, i.e. Sample 11, Sample 12 and Sample 13, characterized by a molar ratio between the moles of ammonium cation and the moles of exchangeable cations present in the nanosized layered clay equal to 1, to 0.75 and to 0.60 respectively. A reduction of Mooney viscosity, a reduction of thermoplasticity, expressed through the difference of dynamic modulus (E') values at low and high temperatures and a reduction of Payne Effect are obtained also by reducing to a value lower than 1 the molar ratio between the moles of ammonium cation and the moles of exchangeable cations present in the nanosized layered clay.

## Claims

**1.** Process for producing tyres for vehicles wheels, said process comprising the following steps:

obtaining at least one crossilnkable elastomeric material;
making a raw tyre by assembling a plurality of structural elements, at least one of which comprising said at least one crosslinkable elastomeric material;
molding and crosslinking the raw tyre so as to obtain a finished tyre;

wherein the step of obtaining said at least one crosslinkable elastomeric material includes:

(i) mixing at least one layered clay (a), at least one further filler (b) and at least one elastomer (c), so as to at least partially delaminate said at least one layered clay within the at least one elastomer;
(ii) adding to the mixture prepared in step (i) at least one quaternary alkyl onium cation (d) selected from quaternary alkyl ammonium or quaternary alkyl phosphonium or mixture thereof.

**2.** Process for producing tyres for vehicles wheels according to claim 1, wherein said process is performed using an internal mixer of the type with tangential rotors (Banbury) or with interlocking rotors (Intermix), or using an open mixer of open-mill type, by sequentially carrying out steps (i) mixing at least one layered clay (a), at least one further filler (b) and at least one elastomer (c), so as to at least partially delaminate said at least one layered clay; and (ii) adding to the mixture prepared in step (i) at least one quaternary alkyl onium cation (d) selected from quaternary alkyl ammonium or quaternary alkyl phosphonium or mixture thereof, without discharging the elastomeric mixture after step (i).

**3.** Process for producing tyres for vehicles wheels according to claim 1, wherein said process is performed in continuous mixers of Ko-Kneader type (Buss), or of co-rotating or counter-rotating twin-screw type, by feeding at least one elastomer (c), at least one layered clay (a) and at least one further filler (b) in a first main feeding inlet and/or in a first or second downstream side feeder and by collecting the extrudate, said extrudate is then fed into the first main feeding inlet of an extruder and the at least one quaternary alkyl onium cation (d) selected from quaternary alkyl ammonium or quaternary alkyl phosphonium or mixture thereof is then fed in the first and/or the second downstream side feeder.

**4.** Process for producing tyres for vehicles wheels according to claim 1, wherein in the step (i) of said process, water could be added together with at least one elastomeric polymer (c), at least one layered clay (a) and at least one further filler (b).

**5.** Process for producing tyres for vehicles wheels according to claim 1, wherein said process is performed using an internal mixer of the type with tangential rotors (Banbury) or with interlocking rotors (Intermix), by sequentially carrying

out steps (i) and (ii), discharging the elastomeric mixture alter step (i).

**6.** Process according to claim 1, wherein said layered clay (a) has a BET surface area, of from about 1 $m^2/g$ to about 200 $m^2/g$.

**7.** Process according to claim 1, wherein said layered clay (a) has an average particle size (D50) lower than or equal to 70 micrometers.

**8.** Process according to claim 1, wherein said layered clay (a) is selected from phyllosilicates such as: smectites, for example, montmorillonite, bentonite, nontronite, beidellite, volkonskoite, hectorite, saponite, sauconite; vermiculite; halloisite; sericite; aluminate oxides; or mixtures thereof.

**9.** Process according to claim 1, wherein said layered clay (a) is added in an amount of from about 3 phr to about 120 phr.

**10.** Process according to claim 1, wherein said further filler(b) is added in an amount of from 10 phr to 90 phr.

**11.** Process according to claim 10, wherein said further filler (b) is selected among carbon black, silica or carbon black modified with silica.

**12.** Process according to claim 11, wherein said carbon black or carbon black modified with silica has a surface area of not less than 20 $m^2/g$ (determined by STSA - statistical thickness surface area).

**13.** Process according to claim 11, wherein said silica is selected from pyrogenic silica or a precipitated silica, with a BET surface area of from about 50 $m^2/g$ to about 500 $m^2/g$.

**14.** Process according to claim 1, wherein said at least one elastomeric polymer (c) is selected among ($c_1$), diene elastomeric polymers or copolymers with an unsaturated chain having a glass transition temperature ($T_g$), generally below 20°C, or ($c_2$) elastomeric polymers of one or more monoolefins with an olefinic comonomer or derivatives thereof or is selected among mixtures of said diene elastomeric polymers ($c_1$) with said elastomeric polymers ($c_2$).

**15.** Process according to claim 1, wherein said at least one quaternary alkyl onium cation (d) may be selected from quaternary ammonium or phosphonium salts having general formula (I):

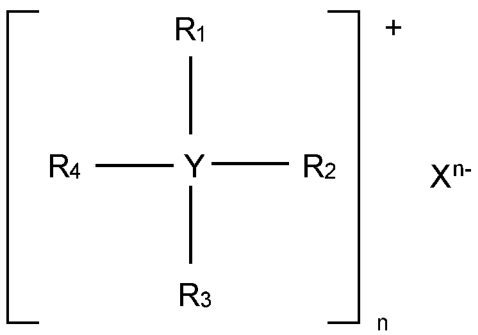

(I)

wherein:

- Y represents N or P;
- $R_1$, $R_2$, $R_3$, and $R_4$, which may be equal or different from each other, represent a linear or branched $C_1$-$C_{20}$ alkyl or hydroxyalkyl group; a linear or branched $C_1$-$C_{20}$ alkenyl or hydroxyalkenyl group; a group -$R_5$-SH or -$R_5$-NH wherein $R_5$ represents a linear or branched $C_1$-$C_{20}$ alkylene group; a $C_6$-$C_{18}$ aryl group; a $C_7$-$C_{20}$ arylalkyl or alkylaryl group; a $C_5$-$C_{18}$ cycloalkyl group, said cycloalkyl group possibly containing hetero atom such as oxygen, nitrogen or sulfur;
- $X^{n-}$ represents an anion such as the chloride ion, the sulphate ion or the phosphate ion;
- n represents 1, 2 or 3.

**16.** Process according to claim 15, wherein said alkyl ammonium or alkyl phosphonium salt is added in an amount of from about 0 phr to about 50 phr.

**17.** Process according to claim 16, wherein said alkyl ammonium or alkyl phosphonium salt is added in an amount of from about 0.5 phr to about 20 phr.

**18.** Process according to claim 17, wherein said alkyl ammonium or alkyl phosphonium salts added in an amount of from about 1 phr to about 10 phr.

**19.** Process according to claim 18, wherein the ratio (r) between the moles of quaternary alkyl onium cation (d) and the moles of exchangeable alkaline and alkaline-earth cations present in the used amount of the layered clay (a), is: 1.2 > (r) > 0.1, where the moles of exchangeable alkaline and alkallne-earth cations present in the used amount of the layered clay (a) are calculated by multiply the value of the cationic exchange capacity (C.E.C.) by the value expressing the amount of the layered clay, where cationic exchange capacity is expressed in equivalents/weight unit.

**20.** Process according to claim 19, wherein the ratio (r) is: 0.9 > (r) > 0.3.

**21.** Process according to claim 20, wherein the ratio (r) is: 0.8 > r > 0.5.

**22.** Process according to claim 1, wherein (f) at least one methylene donor compound and (g) at least one methylene acceptor compound are added.

**23.** Process according to claim 22, wherein said (g) at least one methylene donor compound is selected from: hexamethylenetetramine (HMT); hexamethoxymethylmelamine (HMMM); formaldehyde; paraformaldehyde; trioxane; 2-methyl-2-nitro-1-propenal; substituted melamine resins such as N-substituted oxymethylmelamine resins; glycoluril compounds such as tetramethoxymethyl glycouril; urea-formaldehyde resins such as butylated urea-formaldehyde resins; or mixtures thereof.

**24.** Process according to claim 22, wherein said (g) at least one methylene acceptor compound is selected from: resorcinol; catechol; hydroquinone; pyrogallol; phloroglucinol; 1-naphthol; 2-naphthol; phenolic resins obtained from the condensation of an optionally substituted phenol with an aldehyde such as formaldehyde, acetaldehyde; furfural, modified resorcinol.

**Patentansprüche**

**1.** Verfahren zur Herstellung von Reifen für Fahrzeugräder, wobei das Verfahren die folgenden Stufen umfasst:

Erhalten zumindest eines vernetzbaren Elastomermaterials;
Herstellen eines Rohreifens durch Zusammenbauen einer Vielzahl von strukturellen Elementen, von welchen zumindest eines das zumindest eine vernetzbare Elastomermaterial enthält;
Formen und Vernetzen des Rohreifens, um einen fertigen Reifen zu erhalten;
wobei der Schritt des Erhaltens des zumindest einen vernetzbaren Elastomermaterials umfasst:

(i) Mischen zumindest eines Schichttons (a), zumindest eines weiteren Füllstoffs (b) und zumindest eines Elastomers (c), um den zumindest einen Schichtton innerhalb des zumindest einen Elastomers zu delaminieren;
(ii) Hinzufügen zumindest eines quaternären Alkyl-oniums (d), ausgewählt aus quaternärem Alkylammonium oder quaternärem Alkylphosphonium oder Mischungen davon, zu der in Schritt (i) bereiteten Mischung.

**2.** Verfahren zur Herstellung von Reifen für Fahrzeugräder nach Anspruch 1, wobei das Verfahren unter Verwendung eines internen Mischers des Typs mit tangentialen Rotoren (Banbury) oder mit verschränkten Rotoren (Intermix) ausgeführt wird, oder unter Verwendung eines offenen Mischers vom Open-Mill-Typ, durch sequenzielles Ausführen der Schritte (i) Mischen zumindest eines Schichttons (a), zumindest eines weiteren Füllstoffs (b) und zumindest eines Elastomers (c), um den zumindest einen Schichtton innerhalb des zumindest einen Elastomers zu delaminieren; und
(ii) Hinzufügen zumindest eines quaternären Alkyl-oniums (d), ausgewählt aus quaternärem Alkylammonium oder quaternärem Alkylphosphonium oder Mischungen davon, zu der in Schritt (i) bereiteten Mischung, ohne die Elastomermischung nach Schritt (i) zu entladen.

**3.** Verfahren zur Herstellung von Reifen für Fahrzeugräder nach Anspruch 1, wobei das Verfahren in kontinuierlichen

Mischern vom Ko-Kneader-Typ (Buss), oder vom gemeinsam rotierenden oder gegengleich rotierenden Doppelschneckentyp, durch Einspeisen zumindest eines Elastomers (c), zumindest eines Schichttons (a) und zumindest eines weiteren Füllstoffs (b) in einen ersten Haupteinspeiseeinlass und/oder in eine erste oder zweite Einspeisung auf der stromabwärtigen Seite, und durch Sammeln des Extrudats ausgeführt wird, wobei das Extrudat anschließend in den ersten Haupteinspeiseeinlass eines Extruders eingespeist wird, und das zumindest eine quaternäre Alkyl-onium-Kation (d) ausgewählt aus quaternärem Alkylammonium oder quaternärem Alkylphosphonium oder Mischungen davon anschließend in die erste und/oder zweite Einspeisung auf der stromabwärtigen Seite eingespeist wird.

**4.** Verfahren zur Herstellung von Reifen für Fahrzeugräder nach Anspruch 1, wobei in Schritt (i) des Verfahrens Wasser mit zumindest einem Elastomer-Polymer, (c), zumindest einem Schichtton (a) und zumindest einem weiteren Füllstoff (b) hinzugefügt werden könnte.

**5.** Verfahren zur Herstellung von Reifen für Fahrzeugräder nach Anspruch 1, wobei das Verfahren unter Verwendung eines internen Mischers des Typs mit tangentialen Rotoren (Banbury) oder mit verschränkten Rotoren (Intermix) ausgeführt wird, indem die Schritte (i) und (ii) sequenziell ausgeführt werden, wobei die Elastomermischung nach Schritt (i) entladen wird.

**6.** Verfahren nach Anspruch 1, wobei der Schichtton (a) einen BET-Oberflächenbereich von etwa 1 $m^2/g$ bis etwa 200 $m^2/g$ aufweist.

**7.** Verfahren nach Anspruch 1, wobei der Schichtton (a) eine mittlere Partikelgröße (D50) gleich 70 Mikrometer oder darunter aufweist.

**8.** Verfahren nach Anspruch 1, wobei der Schichtton (a) ausgewählt ist aus Phyllosilikaten wie: Smektiten, zum Beispiel Montmorillonit, Bentonit, Nontronit, Beidellit, Volkonskoit, Hektorit, Saponit, Sauconit; Vermiculit; Halloysit; Sericit; Aluminiumoxiden; oder Mischungen davon.

**9.** Verfahren nach Anspruch 1, wobei der Schichtton (a) in einer Menge von etwa 3 phr bis etwa 120 phr hinzugefügt wird.

**10.** Verfahren nach Anspruch 1, wobei der weitere Füllstoff (b) in einer Menge von 10 phr bis 90 phr hinzugefügt wird.

**11.** Verfahren nach Anspruch 10, wobei der weitere Füllstoff (b) ausgewählt ist aus Kohlenstoffruß, Siliziumdioxid oder mit Siliziumdioxid modifiziertem Kohlenstoffruß.

**12.** Verfahren nach Anspruch 11, wobei der Kohlenstoffruß oder der mit Siliziumdioxid modifizierte Kohlenstoffruß einen Oberflächenbereich von nicht weniger als 20 $m^2/g$ (bestimmt durch das STSA-Verfahren) aufweisen.

**13.** Verfahren nach Anspruch 11, wobei das Siliziumdioxid ausgewählt ist aus pyrogenem Siliziumdioxid oder gefälltem Siliziumdioxid, mit einem BET-Oberflächenbereich von etwa 50 $m^2/g$ bis etwa 500 $m^2/g$.

**14.** Verfahren nach Anspruch 1, wobei das zumindest eine Elastomer-Polymer (c) ausgewählt ist aus ($c_1$) Dien-Elastomerpolymeren oder -Copolymeren mit einer ungesättigten Kette und mit einer Glasübergangstemperatur ($T_g$) allgemein unter 20 °C, oder ($c_2$) Elastomerpolymeren aus einem oder mehreren Monoolefinen mit einem olefinischen Comonomer oder Derivaten davon, oder aus Mischungen der Dien-Elastomerpolymere ($c_1$) mit den Elastomerpolymeren ($c_2$) ausgewählt ist.

**15.** Verfahren nach Anspruch 1, wobei das zumindest eine quaternäre Alkyl-onium-Kation (d) ausgewählt sein kann aus quaternären Ammonium- oder Phosphoniumsalzen mit der allgemeinen Formel (I):

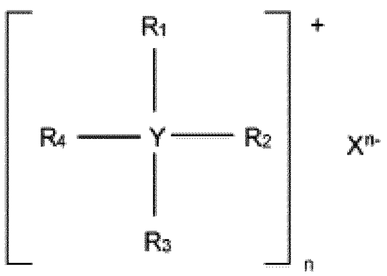

(I)

wobei:

Y N oder P darstellt;
$R_1$, $R_2$, $R_3$ und $R_4$ gleich oder verschieden sein können und eine geradkettige oder verzweigte $C_1$-$C_{20}$-Alkyl- oder -Hydroxyalkyl-Gruppe; oder eine geradkettige oder verzweigte $C_1$-$C_{20}$-Alkenyl- oder Hydroxyalkenyl-Gruppe; eine Gruppe -$R_5$-SH oder -$R_5$-NH, wobei $R_5$ eine geradkettige oder verzweigte $C_1$-$C_{20}$-Alkylen-Gruppe darstellt; eine $C_6$-$C_{18}$-Aryl-Gruppe; eine $C_7$-$C_{20}$-Arylalkyl- oder Alkylaryl-Gruppe; eine $C_5$-$C_{18}$-Cycloalkyl-Gruppe, wobei die Cycloalkyl-Gruppe optional ein Heteroatom wie Sauerstoff, Stickstoff oder Schwefel enthält, darstellen können;
$X^{n-}$ ein Anion wie das Chlorid-Ion, das Sulfat-Ion oder das Phosphat-Ion darstellt; n 1, 2 oder 3 darstellt.

**16.** Verfahren nach Anspruch 15, wobei das Alkylammonium- oder Alkylphosphonium-Salz in einer Menge von etwa 0 phr bis etwa 50 phr hinzugefügt wird.

**17.** Verfahren nach Anspruch 16, wobei das Alkylammonium- oder Alkylphosphonium-Salz in einer Menge von etwa 0,5 phr bis etwa 20 phr hinzugefügt wird.

**18.** Verfahren nach Anspruch 17, wobei das Alkylammonium- oder Alkylphosphonium-Salz in einer Menge von etwa 1 phr bis etwa 10 phr hinzugefügt wird.

**19.** Verfahren nach Anspruch 18, wobei das Verhältnis (r) der Molmengen zwischen dem quaternären Alkyl-onium-Kation (d) und den austauschbaren Alkali- und Erdalkali-Kationen, die in der verwendeten Menge an Schichtton (a) vorliegen, 1,2 > (r) > 0,1 ist, wobei die Molmenge der austauschbaren Alkali- und Erdalkali-Kationen, die in der verwendeten Menge an Schichtton (a) vorliegen, durch Multiplikation des Wertes für die Kationenaustauschkapazität (C.E.C.) mit dem Wert, der die Menge an Schichtton ausdrückt, berechnet wird, wobei die Kationenaustauschkapazität in Äquivalenten pro Gewichtseinheit ausgedrückt wird.

**20.** Verfahren nach Anspruch 19, wobei das Verhältnis (r) 0,9 > (r) > 0,3 ist.

**21.** Verfahren nach Anspruch 20, wobei das Verhältnis (r) 0,8 > (r) > 0,5 ist.

**22.** Verfahren nach Anspruch 1, wobei (f) zumindest eine Methylen-Donorverbindung und (g) zumindest eine Methylen-Akzeptorverbindung hinzugefügt werden.

**23.** Verfahren nach Anspruch 22, wobei die (g) zumindest eine Methylendonorverbindung ausgewählt ist aus: Hexamethylentetramin (HMT); Hexamethoxymethylmelamin (HMMM); Formaldehyd; Paraformaldehyd; Trioxan; 2-Methyl-2-nitro-1-propanal; substituierte Melaminharze wie N-substituierte Oxymethylmelamin-Harze; Glycoluril-Verbindungen, wie Tetramethoxymethylglycoluril; Harnstoff-Formaldehyd-Harze, wie butylierte Harnstoff-Formaldehyd-Harze; oder Mischungen davon.

**24.** Verfahren nach Anspruch 22, wobei die (g) zumindest eine Methylenakzeptorverbindung ausgewählt ist aus: Resorcinol; Catechol; Hydroquinon; Pyrogallol; Phloroglucinol; 1-Naphthol; 2-Naphthol; Phenolharzen, die durch Kondensation eines optional substituierten Phenols mit einem Aldehyd wie Formaldehyd, Acetaldehyd; Furfural, modifiziertem Resorcinol erhalten werden.

## Revendications

**1.** Procédé de production de pneus pour roues de véhicules, ledit procédé comprenant les étapes suivantes consistant :

à obtenir au moins un matériau élastomère réticulable ;
à fabriquer un pneu brut en assemblant une pluralité d'éléments structurels, dont au moins l'un comprend ledit au moins un matériau élastomère réticulable ;
à mouler et à réticuler le pneu brut de manière à obtenir un pneu fini ;
dans lequel l'étape consistant à obtenir ledit au moins un matériau élastomère réticulable comporte le fait :

(i) de mélanger au moins une argile stratifiée (a), au moins une charge supplémentaire (b) et au moins un élastomère (c), de manière à délaminer au moins partiellement ladite au moins une argile stratifiée dans

ledit au moins un élastomère ;
(ii) d'ajouter au mélange préparé à l'étape (i) au moins un cation alkyl-onium quaternaire (d) choisi parmi un alkylammonium quaternaire ou un alkylphosphonium quaternaire ou un mélange de ceux-ci.

**2.** Procédé de production de pneus pour roues de véhicules selon la revendication 1,
dans lequel ledit procédé est effectué en utilisant un mélangeur interne du type à rotors tangentiels (Banbury) ou à rotors engrenants (Intermix), ou en utilisant un mélangeur ouvert du type à cylindre, en réalisant séquentiellement les étapes consistant (i) à mélanger au moins une argile stratifiée (a), au moins une charge supplémentaire (b) et au moins un élastomère (c), de manière à délaminer au moins partiellement ladite au moins une argile stratifiée ; et (ii) à ajouter au mélange préparé à l'étape (i) au moins un cation alkyl-onium quaternaire (d) choisi parmi un alkylammonium quaternaire ou un alkylphosphonium quaternaire ou un mélange de ceux-ci, sans décharger le mélange élastomère après l'étape (i).

**3.** Procédé de production de pneus pour roues de véhicules selon la revendication 1, dans lequel ledit procédé est effectué dans des mélangeurs continus du type Ko-Kneader (Buss), ou du type à deux vis co-rotatives ou contrarotatives, en introduisant au moins un élastomère (c), au moins une argile stratifiée (a) et au moins une charge supplémentaire (b) dans une première entrée d'alimentation principale et/ou dans un premier ou un deuxième dispositif d'alimentation côté aval et en recueillant l'extrudat, ledit extrudat est ensuite introduit dans la première entrée d'alimentation principale d'une extrudeuse et l'au moins un cation alkyl-onium quaternaire (d) choisi parmi un alkylammonium quaternaire ou un alkylphosphonium quaternaire ou un mélange de ceux-ci et ensuite introduit dans le premier et/ou le deuxième dispositif d'alimentation côté aval.

**4.** Procédé de production de pneus pour roues de véhicules selon la revendication 1, dans lequel à l'étape (i) dudit procédé, de l'eau peut être ajoutée ensemble avec au moins un polymère élastomère (c), au moins une argile stratifiée (a) et au moins une charge supplémentaire (b).

**5.** Procédé de production de pneus pour roues de véhicules selon la revendication 1, dans lequel ledit procédé est effectué en utilisant un mélangeur interne du type à rotors tangentiels (Banbury) ou à rotors engrenants (Intermix), en réalisant séquentiellement les étapes (i) et (ii), en déchargeant le mélange élastomère après l'étape (i).

**6.** Procédé selon la revendication 1, dans lequel ladite argile stratifiée (a) a une surface spécifique BET comprise entre environ 1 $m^2/g$ et environ 200 $m^2/g$.

**7.** Procédé selon la revendication 1, dans lequel ladite argile stratifiée (a) a une taille moyenne de particules (D50) inférieure ou égale à 70 micromètres.

**8.** Procédé selon la revendication 1, dans lequel ladite argile stratifiée (a) est choisie parmi les phyllosilicates tels que : les smectites, par exemple, la montmorillonite, la bentonite, la nontronite, la beidellite, la volkonskoïte, l'hectorite, la saponite, la sauconite, la vermiculite ; l'halloysite ; la séricite ; les oxydes d'aluminate ; ou leurs mélanges.

**9.** Procédé selon la revendication 1, dans lequel ladite argile stratifiée (a) est ajoutée en une quantité comprise entre environ 3 phr et environ 120 phr.

**10.** Procédé selon la revendication 1, dans lequel ladite charge supplémentaire (b) est ajoutée en une quantité comprise entre 10 phr et 90 phr.

**11.** Procédé selon la revendication 10, dans lequel ladite charge supplémentaire (b) est choisie parmi le noir de carbone, la silice ou le noir de carbone modifié avec de la silice.

**12.** Procédé selon la revendication 11, dans lequel ledit noir de carbone ou ledit noir de carbone modifié avec de la silice a une surface supérieure ou égale à 20 $m^2/g$ (déterminée par la surface par épaisseur statistique - STSA) .

**13.** Procédé selon la revendication 11, dans lequel ladite silice est choisie parmi une silice pyrogénée ou une silice précipitée, ayant une surface spécifique BET comprise entre environ 50 $m^2/g$ et environ 500 $m^2/g$.

**14.** Procédé selon la revendication 1, dans lequel ledit au moins un polymère élastomère (c) est choisi parmi ($c_1$) des polymères ou copolymères élastomères diéniques, avec une chaîne insaturée ayant une température de transition vitreuse ($T_g$), généralement inférieure à 20°C, ou ($c_2$) des polymères élastomères d'une ou de plusieurs mono-oléfine(s) et d'un comonomère oléfinique ou des dérivés de ceux-ci ou est choisi parmi des mélanges desdits polymères élastomères diéniques ($c_1$) avec lesdits polymères élastomères ($c_2$).

**15.** Procédé selon la revendication 1, dans lequel ledit au moins un cation alkyl-onium quaternaire (d) peut être choisi parmi des sels d'ammonium ou de phosphonium quaternaires ayant la formule générale (I) :

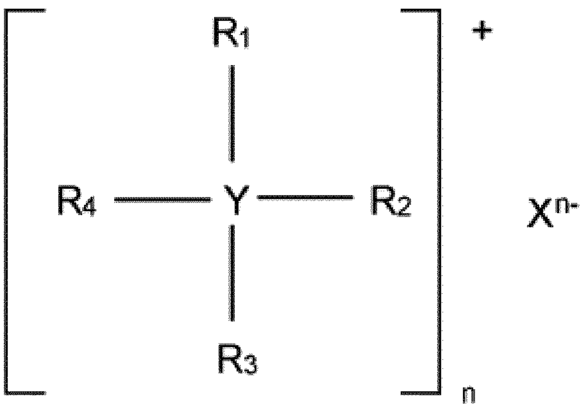

(I)

où :

- Y représente N ou P ;
- $R_1$, $R_2$, $R_3$ et $R_4$, qui peuvent être égaux ou différents l'un de l'autre, représentent un groupe alkyle ou hydroxyalkyle en $C_1$ à $C_{20}$ linéaire ou ramifié ; un groupe alcényle ou hydroxyalcényle en $C_1$ à $C_{20}$ linéaire ou ramifié ; un groupe $-R_5$-SH ou $-R_5$-NH où $R_5$ représente un groupe alkylène $C_1$ à $C_{20}$ linéaire ou ramifié ; un groupe aryle en $C_6$ à $C_{18}$ ; un groupe arylalkyle ou alkylaryle en $C_7$ à $C_{20}$ ; un groupe cycloalkyle en $C_5$ à $C_{18}$, ledit groupe cycloalkyle contenant éventuellement un hétéroatome tel que l'oxygène, l'azote ou le soufre ;
- $X^{n-}$ représente un anion tel que l'ion chlorure, l'ion sulfate ou l'ion phosphate ;
- n représente 1, 2 ou 3.

**16.** Procédé selon la revendication 15, dans lequel ledit sel d'alkylammonium ou d'alkylphosphonium est ajouté en une quantité comprise entre environ 0 phr et environ 50 phr.

**17.** Procédé selon la revendication 16, dans lequel ledit sel d'alkylammonium ou d'alkylphosphonium est ajouté en une quantité comprise entre environ 0,5 phr et environ 20 phr.

**18.** Procédé selon la revendication 17, dans lequel lesdits sels d'alkylammonium ou d'alkylphosphonium sont ajoutés en une quantité comprise entre environ 1 phr et environ 10 phr.

**19.** Procédé selon la revendication 18, dans lequel le rapport (r) entre les moles du cation alkyl-onium quaternaire (d) et les moles de cations alcalins et alcalino-terreux échangeables présents dans la quantité utilisée de l'argile stratifiée (a) est : 1,2 > (r) > 0,1, où les moles de cations alcalins et alcalino-terreux échangeables présents dans la quantité utilisée de l'argile stratifiée (a) sont calculées en multipliant la valeur de la capacité d'échange cationique (CEC) par la valeur exprimant la quantité de l'argile stratifiée, où la capacité d'échange cationique est exprimée en équivalents/unité de poids.

**20.** Procédé selon la revendication 19, dans lequel le rapport (r) est : 0,9 > (r) > 0,3.

**21.** Procédé selon la revendication 20, dans lequel le rapport (r) est : 0,8 > r > 0,5.

**22.** Procédé selon la revendication 1, dans lequel (f) au moins un composé donneur de méthylène et (g) au moins un composé accepteur de méthylène sont ajoutés.

**23.** Procédé selon la revendication 22, dans lequel ledit (g) au moins un composé donneur de méthylène est choisi parmi : l'hexaméthylènetétramine (HMT) ; l'hexaméthoxyméthylmélamine (HMMM) ; le formaldéhyde ; le paraformaldéhyde ; le trioxane ; le 2-méthyl-2-nitro-1-propénal ; des résines de mélamine substituée telles que des

résines d'oxyméthylmélamine N-substituée ; des composés de glycoluril tels que le tétraméthoxyméthyl glycouril ; des résines urée-formaldéhyde telles que des résines urée-formaldéhyde butylées ; ou leurs mélanges.

**24.** Procédé selon la revendication 22, dans lequel ledit (g) au moins un composé accepteur de méthylène est choisi parmi : le résorcinol ; le catéchol ; l'hydroquinone ; le pyrogallol ; le phloroglucinol ; le 1-naphtol ; le 2-naphtol ; des résines phénoliques obtenues à partir de la condensation d'un phénol éventuellement substitué avec un aldéhyde tel que le formaldéhyde, l'acétaldéhyde ; le furfural, le résorcinol modifié.

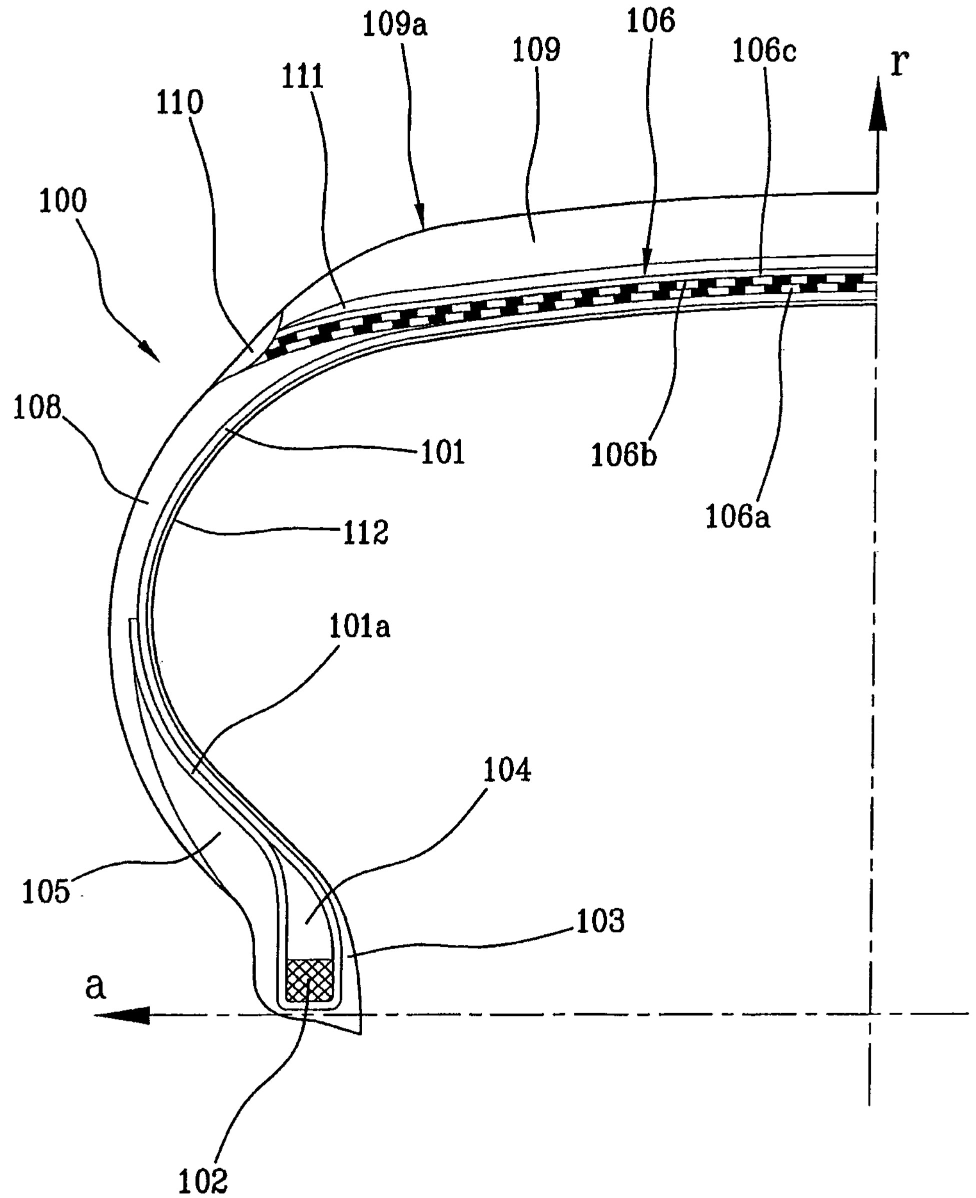
109a
109
106
106c
r
111
110
100
108
101
106b
112
106a
101a
104
105
103
a
102

FIG 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020095008 A
- WO 05002883 A
- WO 07144012 A
- WO 08009304 A
- EP 1321489 A1
- US 20050065265 A1
- US 20050065266 A1
- EP 1273616 A1
- US 2005090584 A
- JP 2005289758 A
- EP 451604 A
- US 4742124 A
- US 4550142 A
- EP 928680 A
- EP 928702 A
- EP 199064 A
- US 4872822 A
- US 4768937 A